# EUROPÄISCHE PATENTSCHRIFT

(11) **EP 2 760 239 B1**
(45) Veröffentlichungstag und Bekanntmachung des Hinweises auf die Patenterteilung: **06.01.2016**
(21) Anmeldenummer: 13199778.5
(22) Anmeldetag: 30.12.2013
(51) Int. Cl.: H04W 48/16, H04W 4/02

(54) **Verfahren zum Betreiben eines Mobilfunksystems mit einem terahertzfähigen, mobilen elektronischen Endgerät**
Method for operating a mobile radio system with a mobile electronic terminal with terahertz capability
Procédé de fonctionnement d'un système radio mobile avec un terminal électronique mobile fonctionnant dans le domaine du terahertz

(30) Priorität: 29.01.2013 DE 102013100867
(43) Veröffentlichungstag der Anmeldung: 30.07.2014
(73) Patentinhaber: Deutsche Telekom AG, 53113 Bonn (DE)
(72) Erfinder: Braun, Dr. Ing. Ralf-Peter, 12305 Berlin (DE); Schneider, Prof. Dr. Thomas, 14552 Michendorf (DE); Grigat, Dipl.-Ing. Michael, 64372 Ober-Ramstadt (DE); Preuszler, Dipl.-Ing. Stefan, 01612 Nünchritz (DE)
(74) Vertreter: Braun-Dullaeus, Karl-Ulrich

(56) Entgegenhaltungen:
- US-A1- 2002 059 453
- US-A1- 2004 203 889
- US-A1- 2009 191 892
- US-A1- 2010 080 197
- US-A1- 2012 071 174

## Beschreibung

Verfahren zum Betreiben eines Mobilfunksystems, mit einem terahertzfähigen, mobilen elektronischen Endgerät.

Aufgrund des ansteigenden Bedarfs an Datenübertragungskapazität über drahtlose Verbindungskanäle werden die derzeit verwendeten Techniken, z. B. LTE, WLAN, usw. demnächst an ihre Leistungsgrenze stoßen. Daher befasst sich die Forschung mit der Möglichkeit, Informationen über die Terahertzwelle zu verbreiten. Die Terahertzwelle verspricht eine Datenübertragung mit sehr hohen Übertragungsraten. Die DE 10 2008 020 466 A1 zeigt ein Verfahren zwischen einem Sendemittel und einem Empfangsmittel sowie ein System zur Umsetzung des Verfahrens. So ist z.B. in einer häuslichen Umgebung eine Sendestation vorgesehen, die gebündelte elektromagnetische Welle im Terahertzbereich gezielt auf ein Empfangsgerät, beispielsweise einen Laptop oder ein Mobiltelefon übersendet. Über eine andere Datenverbindung, beispielsweise eine herkömmliche WLAN-Verbindung wird die Datenübertragung über die Terahertzwelle eingeleitet. Die Verwendung der Terahertzwelle als Trägermedium ist dem Grunde nach auch in der US 2010/0080197 A1 beschrieben.

Die Terahertzwelle eignet sich bislang lediglich für die Übertragung über sehr geringe Entfernungen im Bereich einiger Meter, da die Terahertzwelle einer recht hohen Dämpfung unterliegt. Um die Datenübertragung möglichst effizient zu gestalten, hat es sich als geeignet herausgestellt, die Verbindung über eine gebündelte elektromagnetische Welle abzuwickeln, was somit Übertragungslängen von ca. 1 km zulassen könnte. Dieser Wert ist aber abhängig von vielen Einflussfaktoren, wie z.B. der Datenrate, der Sendeleistung, der Bandbreite, usw..

Es ist allerdings davon auszugehen, dass ein Terahertzempfang mit wirtschaftlichen Mitteln in absehbarer Zeit flächendeckend (ähnlich der heutigen Mobilfunkversorgung) nicht möglich sein wird. Der Terahertzempfang wird daher vermutlich auf Hotspots beschränkt bleiben, die an gut frequentierten Standorten, beispielsweise öffentliche Plätze, Flughäfen, Bahnhöfen, Hotels, usw. installiert sind. Dabei werden vorzugsweise gebündelte Terahertzwellen eingesetzt, um bestimmte Terahertz-Empfangsbereiche auszuleuchten.

Ferner hat sich herausgestellt, dass Hindernisse in der Sendestrecke, beispielsweise Wände, Möbel, aber auch Personen selbst die Datenübertragung mittels Terahertzwellen nachhaltig verschlechtern. So ist also eine möglichst freie Sendestrecke zwischen Sendestation und Endgerät wünschenswert. Zur Umgehung der Hindernisse und für eine Mehrwegeausbreitung können spezielle Reflektoren verwendet werden.

Die US 2012/0071174 A1 offenbart ein Verfahren zum Betreiben eines Mobilfunksystems. Möchte ein Nutzer eine große Menge an Daten zu seinem Mobilfunkgerät herunterladen, so wird zunächst geprüft, ob die Netzkapazität oder Netzinfrastruktur dies an seinem momentanen Standort zulässt. Andernfalls wird er per Navigation in den Sendebereich einer anderen, geeigneten Sendestation geführt.

Die Erfindung steht daher vor der Aufgabe, trotz der schwierigen Rahmenbedingungen die Nutzung der Terahertzwelle für die Datenübertragung so komfortabel wie möglich zu gestalten.

Die Erfindung schlägt nun ein Verfahren zum Betreiben eines Mobilfunksystems vor. Das Mobilfunksystem umfasst ein terahertzfähiges, mobiles elektronisches Endgerät. Das Verfahren umfasst die folgenden Verfahrensschritte:
Feststellen des Bedarfs an einer Datenverbindung, die mittels einer Terahertzwelle erfolgen soll. Das Endgerät kann den Bedarf beispielsweise dann selbständig feststellen, wenn der Nutzer im Internet eine große Datei zum Herunterladen ausgewählt hat, beispielsweise einen Videofilm in HD-Qualität. Da der Nutzer diesen Film möglichst schnell herunterladen möchte, ist eine möglichst schnelle Datenverbindung wünschenswert. Der Bedarf muss allerdings nicht unmittelbar und sofort vorliegen, sondern kann für die Zukunft gelten. So kann über ein Videokonferenzportal eine Videokonferenz mit vielen Teilnehmern für einen gewissen Zeitpunkt vereinbart werden. Der Bedarf an einer schnellen Datenverbindung über die Terahertzwelle liegt also dann am künftigen Zeitpunkt der vereinbarten Videokonferenz.

Weiter ermittelt das Verfahren selbstständig, ob unter den derzeitigen Standortverhältnissen des Endgeräts eine ausreichend hochbitratige Datenverbindung über eine Terahertzwelle möglich ist. Hierzu kann beispielsweise das Endgerät über dessen Empfangseinrichtung prüfen, ob derzeit Terahertzwellen empfangen werden. Alternativ oder in Kombination damit kann in eine Datenbasis eines Diensteanbieters abgefragt werden, ob die derzeitige Position des Endgeräts, die beispielsweise über einen GPS-Sensor ermittelt wird, im Empfangsbereich einer terahertzfähigen Sendestation liegt.

Der Schritt des Ermittelns umfasst erfindungsgemäß eine Analyse, ob das Endgerät zwar grundsätzlich im Sendebereich der terahertzfähigen Sendestation liegt, aber dennoch keine Terahertzwelle empfangen wird. Dies deutet auf ein Hindernis in der Sendestrecke hin. Die Standortverhältnisse beinhalten also nicht nur die geographischen Angaben über den absoluten Standort, sondern umfassen auch Verhältnisse über momentane Abschirmungen des Endgerätes.

Eine ausreichend hochbitratige Datenverbindung kann insbesondere dann vorliegen, wenn die vorhandene Datenverbindung in der Lage ist, die angeforderten Daten innerhalb einer bestimmten Zeit mit einer gewissen Ausfallsicherheit zu übermitteln. So kann eine schlechte Verbindung, die aufgrund einer Abschirmung nur eine reduzierte Datenübertragungsrate zulässt, als ausreichend für eine bestimmte Anwendung angesehen werden, für eine andere Anwendung hingegen nicht. Ob eine Datenverbindung folglich ausreichend ist oder nicht, kann insbesondere durch eine Bewertung der anfordernden Anwendung ermittelt werden. Als Minimalwert für eine hochbitratige Datenverbindung, die über die Terahertzwelle abgewickelt werden soll, kann eine Übertragungsrate von zumindest 10 Gb/s angesehen werden.

Für den Fall, dass keine ausreichend hochbitratige Datenverbindung über die Terahertzwelle möglich ist, sieht das Verfahren als insbesondere zwingenden Schritt vor: Abgleichen des momentanen Standorts mit einer Datenbasis, in der Standorte gelistet sind (im Folgenden gelistete Standorte), an denen ein Empfang von Terahertzwellen möglich ist. Die Datenbasis kann insbesondere die exakte geographische Position einer terahertzfähigen Sendeanlage und ggf. weitere Informationen insbesondere über die Abstrahlrichtung dieser Sendestation bereitstellen. Die Datenbasis kann an einem entfernten Speicherort oder auch am Endgerät selbst hinterlegt sein.

In einer ersten Variante wird eine Information über eine erforderliche Standortänderung erzeugt und ausgegeben. Diese Information enthält insbesondere Angaben darüber, wie das mobile Endgerät in den Empfangsbereich eines gelisteten Standorts gelangen kann. Eine daraus generierte Ausgabe kann beispielsweise lauten: "Begeben Sie sich 10m nach Norden". Solch eine Anweisung ist beispielsweise dann sinnvoll, wenn am derzeitigen Standort grundsätzlich ein Empfang von Terahertzwellen möglich ist, aber eine Analyse der empfangenen elektromagnetischen Wellen ergeben hat, dass die Terahertzwellen derzeit durch ein Hindernis abgeschirmt werden. Eine andere Ausgabe kann z.B. lauten: "Begeben Sie sich zum Hauptbahnhof, der hundert Meter von Ihnen entfernt ist", ggf. in Verbindung mit einer detaillierten Routenbeschreibung.

Die Information über die erforderliche Standortänderung kann grundsätzlich eine Routeninformation umfassen. Dabei bedient sich das Endgerät einem verbundenen Navigationssystem oder einer auf dem Endgerät installierten Navigationssoftware, welche den Nutzer auf bekannte Art und Weise zu einem gelisteten Standort leitet.

Insbesondere ist es vorgesehen, dass das Endgerät eine Datenverbindung mit einer Datenbasis aufbauen kann, wobei für diese Datenverbindung eine andere Technologie verwendet wird, als die Datenübertragung mittels der Terahertzwelle. Insbesondere sind für diese zweite Datenverbindung die bereits bekannten und weitgehend flächendeckend verfügbaren Datenverbindungen geeignet, insbesondere WLAN, UMTS, LTE usw.. Diese Datenverbindung kann nun für sämtliche Organisationstätigkeiten verwendet werden, die für den Aufbau der schnellen Datenverbindung über die Terahertzwelle erforderlich sind, insbesondere das Abgleichen und Anfragen der gelisteten Standorte und ggf. auch das Anmelden einer gewünschten Datenverbindung für einen bestimmten Zeitpunkt und ggf. für eine bestimmte Dauer und Datenrate.

Bevorzugt umfassen die ausgegebenen Informationen über eine erforderliche Standortänderung das Einblenden von künstlich erzeugter Information in ein Bild der Umgebung des aktuellen Standortes. Dabei kommt insbesondere das Prinzip der sogenannten "augmented reality" (erweiterte Realität) zu Anwendung. Die künstlichen Informationen werden bevorzugt in das Sichtfeld einer Brille, die der Nutzer trägt, eingeblendet. Als Bild der Umgebung werden dann die real durch die Augen erfassten Bildinformationen der Umgebung verstanden.

Vorzugsweise wird während der Datenverbindung über die Tetrahertzwelle eine Ausbreitungsrichtung der Tetrahertzwelle der Position des Endgeräts nachgeführt, wenn das Endgerät bewegt wird. Über einen insbesondere stetigen Abgleich der Positionen des Endgeräts gegenüber der Position der Sendestation kann die Richtung ermittelt werden, in der die Tetrahertzwelle, bevorzugt gebündelt, ausgesendet werden soll. Diese Richtung kann dann durch gezielt schwenkbare Reflektoren eingestellt werden.

Unter einem terahertzfähigen mobilen Endgerät wird ein solches mobiles Endgerät verstanden, welches zumindest Daten über eine Terahertzwelle von einer Sendestation empfangen kann. Als Terahertzwelle wird eine Trägerwelle mit einer Trägerfrequenz von zumindest 300 GHz verstanden. Besondere erscheint die Erfindung für den Frequenzbereich ab 1 THz geeignet zu sein. Das terahertzfähige Endgerät muss aber nicht zwangsläufig in der Lage sein, Daten über die Terahertzwelle auszusenden.

Ein Mobiltelefon, ein Laptop oder ein Tablet-PC werden beispielhaft als mobile elektronische Endgeräte im Sinne der vorliegenden Anmeldung angesehen. Die Fähigkeit zum Empfang von Terahertzwellen kann einem Endgerät auch über ein separates, abnehmbares Element verliehen werden, beispielsweise mittels eines sog. Surf-Sticks.

Ein erfindungsgemäßes Beispiel: Ein Nutzer sitzt in der Empfangshalle eines Hotels und wartet auf eine andere Person. Um die Zeit zu überbrücken veranlasst er den Download eines Videofilmes, den er zu einem späteren Zeitpunkt gerne ansehen möchte. Grundsätzlich verfügt die Empfangshalle des Hotels über eine Sendestation für Terahertzwellen; nun hat sich aber herausgestellt, dass nur ein kleiner Bereich in dieser Empfangshalle sehr gute Empfangsmöglichkeiten bietet; die anderen Bereiche der Empfangshalle sind durch Möbelstücke recht stark abgeschirmt. Diese Erkenntnis ist in einer Datenbank eines Diensteanbieters, der die Sendestation betreibt, abgelegt.

Das Mobiltelefon erkennt nun den Bedarf an einer schnellen Datenverbindung, stellt aber zugleich fest, dass am vorliegenden Standort kein ausreichender Empfang von Terahertzwellen gegeben ist. Es fragt über die UMTS-Verbindung bei dem Diensteanbieter an, ob denn in der Nähe eine Sendestation vorhanden ist, und übermittelt dabei die über eine Lokalisierungsfunktion ermittelten Standortdaten (z.B. mit Hilfe von GPS) des Endgeräts. In der Datenbasis ist hinterlegt, dass in der Empfangshalle zwar eine Sendestation vorhanden ist, jedoch nur in einem bestimmten Bereich der Empfangshalle eine gute Empfangsmöglichkeit herrscht. Diese Information ist verknüpft mit dem Bild der Empfangshalle wobei die Bereiche, die über eine gute Empfangsmöglichkeit für Terahertzwellen verfügen, in irgendeiner Form bildlich hervorgehoben sind, beispielsweise durch eine Einrahmung. Das Bild wird nun auf das Endgerät übertragen und dem Nutzer angezeigt mit dem Hinweis "bitte begeben Sie sich in diesen Bereich der Empfangshalle".

In einem nicht beanspruchten Ausführungsbeispiel ist eine Familie in ihrem Auto unterwegs in den Urlaub. Die Kinder auf der Rückbank genießen auf einem Tablet-PC einen gestreamten Film. Die Fahrt führt entlang einer Route, die durch ein Navigationssystem vorgegeben wird. Das Navigationssystem ist über eine Bluetooth-Verbindung mit dem Tablet-PC gekoppelt. Der Tablet-PC erkennt, dass der Speicher des Tablet-PCs den Film nicht vollständig gespeichert hat und stellt fest, dass in ca. 15 min weitere Teile des Filmes heruntergeladen werden müssen, um eine unterbrechungsfreie Darstellung des Films zu gewährleisten. Es wird nun beim Navigationssystem nach der derzeitigen Route angefragt. Die Routeninformationen werden dann abgeglichen mit einer Datenbasis, in der die gelisteten Standorte hinterlegt sind. Es stellt sich heraus, dass auf der Route in ca. 5 min Entfernung ein gelisteter Standort durchfahren wird, so dass rechtzeitig die weiteren Teile des Filmes über eine schnelle Terahertzverbindung heruntergeladen werden können. In einer kleinen Statusleiste auf dem Bildschirm erscheint ein kleines OK-Zeichen, was darauf hindeutet, dass das Anzeigeprogramm davon ausgeht, dass die neuen Teile des Filmes rechtzeitig heruntergeladen werden, ohne dass es zu einer Unterbrechung des Filmes kommen wird. Sollte der Tablet-PC erkennen, dass in absehbarer Zeit keine unterbrechungsfreie Wiedergabe möglich ist, da kein gelisteter Standort angefahren wird, wird der Tablet-PC eine alternative Route ausarbeiten und anzeigen, an der rechtzeitig eine terahertzfähige Sendestation erreicht werden könnte.

Ein weiteres, nicht beanspruchtes Ausführungsbeispiel: Ein Nutzer hört unterwegs über sein Mobiltelefon die Musik eines Rockkonzertes, welches am Tag zuvor stattgefunden hat. Der Speicher des Mobiltelefons wird nach und nach mit der Musik befüllt. Er benötigt demnächst einen hochbitratigen Zugriff auf das Internet, um weitere Teile des Konzertes nachzuladen. Die aktuelle Position des Nutzers ist über das GPS-Modul des Endgeräts erfassbar und wird abgeglichen mit der Datenbasis der gelisteten Standorte. Aufgrund des aktuellen Bewegungsmusters (konstante Standortänderung von etwa 4 km/h) erkennt das Endgerät, dass der Nutzer höchstwahrscheinlich zu Fuß unterwegs ist. Am nahegelegenen Bahnhof befindet sich eine terahertzfähige Sendestation. Der Nutzer könnte nun einen Umweg über den Bahnhof gehen, der etwa orthogonal abseits zur Bewegungsrichtung des Nutzers angeordnet ist. Ein solcher Umweg würde 5 Minuten in Anspruch nehmen. Das Endgerät gibt nun dem Nutzer die Information aus, dass er für das Fortbestehen seines Hörerlebnisses den Umweg von 5 Minuten zum nahegelegenen Bahnhof machen müsste, um dort weitere Daten herunterzuladen. Der Nutzer kann dann entscheiden, ob er diesen Umweg gehen möchte.

Dem Nutzer können die Informationen über die Standortänderung auf unterschiedlichste Weise mitgeteilt werden. So können akustische Signale (insbesondere übertragen über einen Kopfhörer) verwendet werden, z.B. anhand der Tonlage und/oder der Blickfrequenz. Wird die Tonlage oder die Blinkfrequenz eines Piepstons höher bzw. größer, so nähert sich der Nutzer dem gelisteten Standort an. Eine Ausgabe auf dem rechten bzw. linken Ohr deutet auf den gelisteten Standort eher rechts bzw. links der aktuellen Bewegungsrichtung hin. Alternativ können optische Signale verwendet werden; unterschiedliche Farben zeigen das Annähern (z.B. gelb), das Entfernen (z.B. rot) und das Erreichen (z.B. grün) eines gelisteten Standortes an. Die Farben können als Bildpunkte oder Pfeile auf die Brille des Nutzers projiziert werden oder auf dem Display des Endgerätes dargestellt werden. Auch über die Blinkfrequenz des optischen Signals können die Informationen über die Standortänderung ausgegeben werden, analog zur oben beschriebenen akustischen Ausgabe.

In einer alternativen Ausgestaltung wird der Nutzer automatisch darauf hingewiesen, wenn er sich an einem gelisteten Standort befindet. Die Information enthält dann Angaben über den aktuellen Standort und gibt dem Nutzer den Hinweis, dass er doch gegebenenfalls nun Daten herunterladen könne, wenn er möchte.

## Patentansprüche

1. Verfahren zum Betreiben eines Mobilfunksystems mit einem terahertzfähigen, mobilen elektronischen Endgerät, umfassend die folgenden Verfahrensschritte:
**Feststellen** des Bedarfes an einer Datenverbindung, die über eine Terahertzwelle erfolgen soll,
**Ermitteln,** ob unter den derzeitigen Standortverhältnissen des Endgeräts eine ausreichende Datenverbindung über eine Terahertzwelle möglich ist,
**gekennzeichnet durch**
die folgenden Schritte für den Fall, dass im Schritt Ermitteln festgestellt wurde, dass keine ausreichende Datenverbindung möglich ist:
**Abgleichen** des momentanen Standorts mit einer Datenbasis, in der Standorte gelistet sind, an denen ein Empfang von Terahertzwellen möglich ist,
**Erzeugen und Ausgeben** von Informationen über eine erforderliche Standortänderung, um derart in den Empfangsbereich eines gelisteten Standorts zu gelangen, an dem eine ausreichende Datenverbindung möglich ist,
**und gekennzeichnet dadurch,**
**dass** der Schritt Ermitteln ferner eine Analyse einer möglichen momentanen Abschirmung der Terahertzwelle durch ein Hindernis durch Überprüfen, ob sich das Endgerät zwar grundsätzlich im Sendebereich einer terahertzfähigen Sendestation befindet, das Endgerät aber dennoch keine Terahertzwelle empfängt, umfasst.

2. Verfahren nach dem vorherigen Anspruch,
**dadurch gekennzeichnet,**
**dass** im Schritt Feststellen geprüft wird, ob ein Datenverkehr veranlasst oder geplant ist, der eine Datenübertragung über die Terahertzwelle erfordert.

3. Verfahren nach einem der vorherigen Ansprüche,
**dadurch gekennzeichnet,**
**dass** die Informationen über eine erforderliche Standortänderung eine Routeninformation umfasst.

4. Verfahren nach einem der vorherigen Ansprüche,
**dadurch gekennzeichnet,**
**dass** der Schritt Erzeugen und Ausgeben von Informationen über eine erforderliche Standortänderung das aktuelle Bewegungsmuster oder die aktuelle Routenplanung berücksichtigt und eine neue Routeninformation erzeugt und ausgibt.

5. Verfahren nach einem der vorherigen Ansprüche,
**dadurch gekennzeichnet,**
**dass** für den Schritt Abgleichen eine Datenverbindung verwendet wird, die keine Terahertzwelle erfordert.

6. Verfahren nach einem der vorherigen Ansprüche,
**dadurch gekennzeichnet,**
**dass** die ausgegebenen Informationen über eine erforderliche Standortänderung das Einblenden von künstlich erzeugter Information in ein Bild der Umgebung des aktuellen Standortes umfasst.

7. Verfahren nach einem der vorherigen Ansprüche,
**dadurch gekennzeichnet,**
**dass** während einer Datenverbindung über die Tetrahertzwelle eine Ausbreitungsrichtung der Tetrahertzwelle einer sich ändernden Position des Endgerät nachgeführt wird.

## Claims

1. A method for the operation of a mobile telecommunications system, with a terahertz-enabled mobile electronic terminal, comprising the following method steps:
determining the need for a data connection which is intended to work using a terahertz wave,
establishing, whether in view of the current site conditions of the terminal, a sufficient data connection is possible using a terahertz wave,
**characterised by**
the following steps, in case the establishing step concludes that a sufficient data connection is not possible:
matching the momentary site against a database which lists sites that can receive terahertz waves,
generating and outputting information about a required site change in order to get within the reception range of a listed site at which a sufficient data connection is possible,
and **characterised in that**
the establishing step further comprises an analysis of a possible momentary shielding of the terahertz wave by an obstacle, by checking whether the terminal is basically within the transmission range of a terahertz-enabled broadcasting station, yet is not receiving any terahertz waves.

2. The method according to the preceding cairn,
**characterised in that**,
during the determining step, checks are carried out, as to whether data traffic has been initiated or planned, which requires a data transfer using the terahertz wave.

3. The method according to one of the preceding claims,
**characterised in that**
the information about a required site change includes route information.

4. The method according to one of the preceding claims,
**characterised in that**
the step of generating and outputting information about a required site change takes into account the current movement pattern or the current routing plan and generates and outputs new route information.

5. The method according to one of the preceding claims,
**characterised in that**
in the matching step a data connection is used, which does not require terahertz waves.

6. The method according to one of the preceding claims,
**characterised in that**
the information output about a required site change includes the blending in of artificially generated information into a picture of the environment of the current site.

7. The method according to one of the preceding claims,
**characterised in that**,
during a data connection using the terahertz wave, a spreading direction of the terahertz wave of a changing position of the terminal is tracked.

## Revendications

1. Procédé pour faire fonctionner un système de radiotéléphonie mobile avec un poste terminal électronique mobile à capacité térahertzienne, comprenant les étapes suivantes du Procédé :
la constatation du besoin d'une liaison de données, laquelle doit avoir lieu via une onde térahertzienne,
la détermination pour savoir si, dans les conditions actuelles de position du poste terminal, une liaison de données suffisante via une onde térahertzienne est possible,
**caractérisé par**
les étapes suivantes, dans le cas où il a été constaté, lors de l'étape de détermination, qu'une liaison de données suffisante n'est pas possible :
la comparaison de la position momentanée avec une base de données dans laquelle des positions où une réception d'ondes térahertziennes est possible sont listées,
la génération et restitution d'informations sur un changement de position nécessaire afin de parvenir de la sorte dans la zone de réception d'une position listée où une liaison de données suffisante est possible,
et **caractérisé en ce que**
l'étape de détermination comprend en outre une analyse d'un effet d'écran momentané possible de l'onde térahertzienne dû à un obstacle en vérifiant si le poste terminal, bien qu'il se trouve en principe dans la zone d'émission d'une station d'émission à capacité térahertzienne, le poste terminal ne réceptionne cependant pas d'onde térahertzienne.

2. Procédé selon la revendication précédente,
**caractérisé en ce que**,
dans l'étape de constatation, on vérifie si un trafic de données est déclenché ou planifié, lequel nécessite un transfert de données via l'onde térahertzienne.

3. Procédé selon l'une des revendications précédentes,
**caractérisé en ce que**
les informations sur un changement nécessaire de position comprennent une information d'itinéraire.

4. Procédé selon l'une des revendications précédentes,
**caractérisé en ce que**
l'étape de génération et de restitution d'informations sur un changement de position nécessaire tient compte du modèle de déplacement actuel ou de la planification d'itinéraire actuelle et génère et restitue une nouvelle information d'itinéraire.

5. Procédé selon l'une des revendications précédentes,
**caractérisé en ce que**
pour l'étape de comparaison, on utilise une liaison de données ne nécessitant pas d'onde térahertzienne.

6. Procédé selon l'une des revendications précédentes,
**caractérisé en ce que**
les informations restituées sur un changement de position nécessaire comprennent l'affichage à l'écran d'une information générée artificiellement dans une image de l'environnement de la position actuelle.

7. Procédé selon l'une des revendications précédentes,
**caractérisé en ce que**,
pendant une liaison de données via l'onde térahertzienne, une direction de propagation de l'onde térahertzienne est asservie à une position qui varie du poste terminal.
